**Europäisches Patentamt**

**European Patent Office**

**Office européen des brevets**

(11) Veröffentlichungsnummer: **0 046 929**
**B1**

(12) **EUROPÄISCHE PATENTSCHRIFT**

(45) Veröffentlichungstag der Patentschrift:
**15.02.84**

(51) Int. Cl.³: **B 23 K 7/10,** B 23 K 7/02

(21) Anmeldenummer: **81106453.4**

(22) Anmeldetag: **19.08.81**

(54) **Bearbeitungsmaschine mit einer thermischen Schneidstrahleinrichtung.**

(30) Priorität: **30.08.80 DE 3032729**
**05.11.80 DE 3041621**

(43) Veröffentlichungstag der Anmeldung:
**10.03.82 Patentblatt 82/10**

(45) Bekanntmachung des Hinweises auf die Patenterteilung:
**15.02.84 Patentblatt 84/7**

(84) Benannte Vertragsstaaten:
**CH FR GB LI**

(56) Entgegenhaltungen:
**US - A - 3 792 846**

(73) Patentinhaber: **Trumpf GmbH & Co,**
**Postfach 1320 Johann-Maus-Strasse 2, D-7257 Ditzingen (DE)**

(72) Erfinder: **Leibinger, Berthold, Nanetteweg 3,**
**D-7016 Gerlingen (DE)**
Erfinder: **Klingel, Hans, Teckstrasse 91,**
**D-7141 Möglingen (DE)**

(74) Vertreter: **Schmid, Berthold et al, Patentanwälte**
**Dipl.-Ing. B. Schmid Dr. Ing. G. Birn**
**Falbenhennenstrasse 17, D-7000 Stuttgart 1 (DE)**

## Bearbeitungsmaschine mit einer thermischen Schneidstrahleinrichtung

Die Erfindung bezieht sich auf eine Bearbeitungsmaschine für flache Werkstücke mit einer thermischen Schneidstrahleinrichtung, insbesondere Plasmaschneidstrahleinrichtung sowie einer Bewegungsvorrichtung für das Werkstück gegenüber dem Schneidstrahl.

Eine derartige Bearbeitungsmaschine ist beispielsweise in Form der konventionellen autogenen Brennschneidmaschine bekannt. Darüberhinaus ist eine derartige Bearbeitungsmaschine bekanntgeworden, deren thermische Schneidstrahleinrichtung als Plasmaschneideinrichtung ausgebildet ist (DE-OS 27 43 342). Letztere arbeitet nach dem sogenannten Trockenplasmaverfahren. Der Nachteil dieses Bearbeitungsverfahrens liegt in der lauten Arbeitsweise sowie der Beeinträchtigung der Atemluft im Arbeitsbereich durch entstehende Wärme, Dämpfe, Staub sowie Verbrennungsrückstände.

Eine derartige Beeinträchtigung ist beim nassen Verfahren, beispielsweise nach der US-PS 3 792 846, nicht oder zumindest nicht in diesem Masse gegeben, jedoch erfordert dieses Verfahren ein stillstehendes Werkstück und eine bewegbare Schneidstrahleinrichtung.

Die Aufgabe der Erfindung besteht infolgedessen darin, eine Bearbeitungsmaschine mit einer thermischen Schneidstrahleinrichtung der eingangs genannten Art so weiterzubilden, dass die Beeinträchtigung der Umgebungsluft ohne Verzicht auf die Bewegbarkeit des Werkstücks zumindest reduziert wird.

Zur Lösung dieser Aufgabe wird erfindungsgemäss vorgeschlagen, dass die Bearbeitungsmaschine gemäss dem Oberbegriff des Anspruchs 1 entsprechend dem kennzeichnenden Teil dieses Anspruchs ausgebildet ist. Bei dieser Bearbeitungsmaschine befindet sich die Schneidstrahldüse od. dgl. beispielsweise oberhalb des Werkstücks und die Kühlvorrichtung unmittelbar unterhalb des Werkstücks, und zwar im Strahlbereich, so dass der das Werkstück durchtrennende Schneidstrahl nach dem Austritt aus dem Werkstück unmittelbar in das Kühlmittel gelangt. Als Kühlmittel kommen beispielsweise Wasser, dem gegebenenfalls noch Zusätze beigemengt sein können, Kühlemulsionen und andere nicht brennbare Flüssigkeiten in Frage. Die beim Schmelzen des Werkstücks im Trennbereich entstehenden Dämpfe, Gase und Verbrennungsrückstände werden infolgedessen mit dem Schneidstrahl in die Kühlflüssigkeit hineingeleitet, und weil das Kühlmittel an dieser Stelle ständig vorbeiströmt, sofort abtransportiert. Die Kühlmittelführung, die Grösse und Form der Eintrittsöffnung für den Schneidstrahl sowie Druck und Strömungsgeschwindigkeit des Kühlmittels müssen so gewählt werden, dass ein Kühlmittelaustritt an der Eintrittsöffnung für den Schneidstrahl zumindest weitgehend unterbleibt, trotzdem aber alle Gase und mitgeführten Partikelchen abtransportiert werden können. Zweckmässigerweise wird man deshalb die Eintrittsöffnung nicht wesentlich grösser machen als den Querschnitt des Strahls in diesem Bereich, und andererseits für den Abstand der Eintrittsöffnung zum Werkstück einen Minimalabstand wählen. Aus dem Vorstehenden ergibt sich, dass die Kühlvorrichtung nicht in erster Linie zum Kühlen des Werkstücks dient, sondern den heissen Strahl und die darin mitgeführten gasförmigen sowie flüssigen Teilchen aufnimmt und dessen Bestandteile kühlt sowie abführt.

Die Erfindung sieht vor, dass die Kühlvorrichtung im Bereich der Eintrittsöffnung für den Schneidstrahl aus zwei konzentrisch angeordneten Rohren besteht, von denen wenigstens eines mit einer Fördervorrichtung für das flüssige Kühlmittel verbunden ist. Dabei sind die beiden werkstückseitigen Enden dieser konzentrischen Rohre einander so zugeordnet, dass die über das Innenrohr oder den Ringraum zwischen dem inneren und äusseren Rohr zugeführte Kühlflüssigkeit ohne weiteres über den Ringspalt bzw. das innere Rohr wieder abfliessen kann.

In weiterer Ausgestaltung der Erfindung wird vorgeschlagen, dass das äussere Rohr mit der als Druckpumpe ausgebildeten Fördervorrichtung für das Kühlmittel und das innere Rohr mit einer Flüssigkeitsabsaugvorrichtung verbunden sind. Somit kann man sowohl die Zuführung als auch das Abfliessen der Flüssigkeit erheblich beschleunigen und andererseits ein Austreten der Kühlflüssigkeit über die Eintrittsöffnung für den Schneidstrahl zumindest weitgehend unterbinden.

Eine andere Variante der Erfindung sieht vor, dass das werkstückseitige freie Ende des äusseren Rohres mit einem Innenbund dasjenige des inneren Rohres übergreift, wobei die Innendurchmesser des Innenbundes und des inneren Rohres etwa gleich gross sind. Die Flüssigkeit wird dadurch am Übertritt vom Ringspalt ins Innere des inneren Rohres derart umgelenkt, dass sie, insbesondere in Verbindung mit der Absaugvorrichtung, ausschliesslich das Bestreben hat, durch das innere Rohr abzufliessen und nicht über die Eintrittsöffnung das äussere Rohr zu verlassen. Strömungstechnisch ist es dabei von besonderem Vorteil, dass im Querschnitt die Innenkontur des äusseren Rohres an seinem werkstückseitigen freien Ende bogenförmig, insbesondere etwa halbkreisförmig, verläuft und das werkstückseitige freie Ende des inneren Rohres ebenfalls einen bogenförmigen Querschnitt aufweist. Es entsteht auf diese Weise im Bereich der einander zugekehrten Rohrenden ein bogenförmiger, insbesondere etwa halbkreisförmiger Ringspalt, über welchen das Kühlmittel in das innere Rohr eintritt. Zur weiteren Verbesserung der Strömung in diesem Bereich kann das werkstückseitige freie Ende des inneren Rohres zweckmässigerweise trichterförmig etwas aufgeweitet sein.

Eine weitere Ausbildung der Erfindung sieht vor, dass wenigstens eines der beiden konzentrischen Rohre, insbesondere aber das innere, in Achsrichtung verschiebbar ist. Dadurch lässt sich der erwähnte Ringspalt, über den die Flüssigkeit in das innere Rohr eintritt, hinsichtlich seiner Breite verändern, was man zu Steuerungszwecken ausnutzen kann.

Die Kühlvorrichtung bzw. deren Eintrittsöffnung kann man besonders nahe an das Werkstück heranbringen, wenn gemäss einer weiteren Variante der Erfindung die Stirnseite des äusseren Rohres senkrecht zur Rohrachse verläuft und sie wenigstens einen Teil der Abstützfläche für das Werkstück bildet. Das hat zugleich auch den Vorteil, dass an dieser Stelle in radialer Richtung Flüssigkeit, Gase, Dämpfe und mitgeführte Partikelchen nicht oder allenfalls in vergleichsweise geringem Umfange austreten können und man dadurch einen besonders guten Wirkungsgrad erhält.

Eine weitere Ausbildung der Erfindung ist gekennzeichnet durch einen das äussere Rohr zumindest an seinem werkstückseitigen Ende konzentrisch umgebenden, rinnenartigen, durch das Werkstück abdeckbaren, mit je einem Zu- und Abfluss versehenen Flüssigkeitskanal. Während die Kühlvorrichtung mit den beiden konzentrischen Rohren zweckmässigerweise gar nicht an das Werkstück gelangt und infolgedessen im wesentlichen eine Kühlvorrichtung für die im eintauchenden Schneidstrahl mitgeführten Gase und Partikelchen bildet, kommt die im konzentrisch angeordneten Flüssigkeitskanal enthaltene Flüssigkeit unmittelbar mit dem Werkstück in Berührung. In diesem Falle steht jedoch nicht die Kühlung im Vordergrund, sondern die Schalldämmung. Bekanntlich ist das thermische Trennschneiden, insbesondere auch das Plasmaschneiden, vergleichsweise geräuschvoll, und der Schall tritt selbst dann in radialer Richtung zwischen der Kühlvorrichtung bzw. der Stirnseite des äusseren Rohres und der zugeordneten Werkstückfläche aus, wenn diese Werkstückfläche unmittelbar auf dem äusseren Rohr aufliegt. Wenn jedoch das äussere Rohr in der geschilderten Weise von einem Flüssigkeitsring umgeben ist, so dämpft diese Flüssigkeit die Geräusche in ganz erheblichem Masse, weswegen die Beeinträchtigung der Bedienungsperson auch in dieser Richtung erheblich gemindert wird. Ausserdem bildet die Kühlflüssigkeit auch einen Schmierfilm für die Werkstückbewegung.

Eine bevorzugte Ausführungsform der Erfindung sieht vor, dass der Zufluss des ringförmigen Flüssigkeitskanals mit dem Ringraum zwischen dem inneren und äusseren Rohr der Kühlvorrichtung hydraulisch verbunden ist. Nachdem in diesem Ringraum die Kühlflüssigkeit zugeführt wird, gelangt ein Teil davon über die hydraulische Verbindung zum ringförmigen Flüssigkeitskanal für die Geräuschdämpfung. Wie man diese hydraulische Verbindung im einzelnen ausbildet, ist an sich von untergeordneter Bedeutung. Wesentlich ist aber, dass der ringförmige Flüssigkeitskanal dauernd gefüllt ist, ohne unter wesentlichem Druck zu stehen.

Eine weitere Variante der Erfindung sieht vor, dass die innere Rinnenwandung des rinnenförmigen, ringförmigen Flüssigkeitskanals durch ein das äussere Rohr der Kühlvorrichtung konzentrisch umgebendes drittes Rohr gebildet ist. Das eröffnet die Möglichkeit, zwischen diesem dritten Rohr und dem äusseren Rohr der Kühlvorrichtung einen Ringkanal vorzusehen, der über radiale Bohrungen mit dem Ringraum zwischen dem inneren und dem äusseren Rohr der Kühlvorrichtung in Verbindung steht und insbesondere über einen Ringspalt hydraulisch an das Innere des Flüssigkeitskanals angeschlossen ist. Der zuletzt erwähnte Strömungsweg kann durch das stirnseitige, gegen das Werkstück weisende Ende des dritten Rohres einerseits und die zugekehrte Fläche des Werkstücks andererseits gebildet sein. In diesem Zusammenhang ist es dann besonders vorteilhaft, dass das dritte Rohr in Achsrichtung verschiebbar ist, so dass man die Höhe dieses «Überlaufspalts» den Bedürfnissen entsprechend wählen und gegebenenfalls während des Betriebs ändern kann.

Eine Weiterbildung der Erfindung sieht vor, dass die äussere Rinnenwandung des rinnenförmigen, ringförmigen Flüssigkeitskanals wenigstens zum Teil durch die Innenfläche eines Dichtrings gebildet oder der Flüssigkeitskanal von einem Dichtring konzentrisch umgeben ist, dessen gegen das Werkstück weisende Fläche eine ringförmige Dichtfläche bildet. Dieser Dichtring muss selbstverständlich den auftretenden thermischen und mechanischen Belastungen gewachsen sein. Hierbei darf insbesondere nicht übersehen werden, dass über einen bezüglich der Werkstückbewegung jeweils «rückwärtigen» Dichtungsabschnitt die zuvor erstellte Ausbrennspur hinwegläuft.

Vorteilhafterweise ist der rinnenförmige Flüssigkeitskanal über wenigstens eine hydraulische Leitung mit einer Saugpumpe oder einem Flüssigkeitsbehälter verbunden. Die Saugpumpe unterstützt den raschen Durchlauf der Flüssigkeit durch den rinnenförmigen Flüssigkeitskanal und vermeidet somit deren unzulässige Erwärmung. Bei kurzen Strömungswegen und geringem Strömungswiderstand kann man den rinnenförmigen Flüssigkeitskanal auch unmittelbar über eine oder mehrere Ableitungen mit einem Flüssigkeitsbehälter direkt verbinden, ohne Zwischenschaltung einer Saugpumpe.

Gemäss einer anderen bevorzugten Ausführungsform der Erfindung wird vorgeschlagen, dass die thermische Schneidstrahleinrichtung im seitlichen Abstand von einer Stanz- oder Nibbelvorrichtung der Bearbeitungsmaschine angeordnet ist. Insofern kann man also mit dieser Bearbeitungsmaschine nicht nur Schneidbrennen, sondern auch Stanzen bzw. Nibbeln. Dabei ist es dann von besonderem Vorteil, dass das Werkstück mittels eines in der Art eines Kreuzsupports ausgebildeten Längs- und Quervorschubs innerhalb seiner Ebene in jeder beliebigen Richtung verschoben werden kann, wodurch sich beliebig geformte Umrisse und/oder Ausnehmungen mit dieser Bearbeitungsmaschine herstellen lassen. In der Kühlvorrichtung wird das flüssige Kühlmittel, wie vorstehend beschrieben ist, so geführt, dass der Schneidstrahl unmittelbar nach seinem Austritt aus dem zu durchtrennenden Werkstück in das Kühlmittel eintreten kann, wobei sich dann die mitgeführten Partikelchen, Gase u. dgl. abkühlen. Da der Schneidstrahl das Werkstück zum Schmelzen bringt, führt er eine ganze Menge glühender Teilchen mit sich, die sich erst im Verlaufe ihres Transportwegs durch die Kühlvorrichtung vollständig abkühlen. Das Abkühlen und den Abtransport kann man zwar dadurch etwas effizienter gestalten, dass man das Kühlmittel mit höherem Druck zuführt und dadurch seine Durchlaufgeschwindigkeit beschleunigt, jedoch sind dem aus verschiedenen Gründen Grenzen gesetzt.

Um die Bearbeitungsmaschine in dieser Richtung zu verbessern, wird in weiterer Ausgestaltung der Erfindung vorgeschlagen, dass sich in der Kühlvorrichtung ein rotierender Kühlflüssigkeitsmantel befindet, dessen dem Werkstück zugeordnetes Ende die Eintrittsöffnung für den Schneidstrahl bildet. In dem rotierenden Kühlflüssigkeitsmantel, dessen Drehbewegung aufgrund seiner vorzugsweise vertikalen Anordnung eine Abwärtsbewegung überlagert ist, herrscht, bezogen auf einen bestimmten Wasserdurchsatz, eine wesentlich höhere Strömungsgeschwindigkeit als bei der rein axialen Abflussbewegung der Kühlflüssigkeit der vorgeschlagenen Bearbeitungsmaschine. Es kommt noch hinzu, dass in dem rotierenden Kühlflüssigkeitsmantel eine gewisse Fliehkraft herrscht, welche die Kühlflüssigkeit veranlasst, direkt entlang einer führenden Wandung zu fliessen und sich nicht in unbestimmter Weise im Abflusskanal der Kühlvorrichtung zu verteilen, ohne letzteren vollständig auszufüllen. Infolgedessen erreicht man in der angestrebten Weise ein wirkungsvolleres Abführen des Schneidstrahls und seiner mitgeführten festen Partikelchen, und aufgrund einer verhältnismässig dicken Flüssigkeitsschicht entlang dem Abströmkanal der Kühlflüssigkeit einen guten Schutz gegen unerwünschtes Absetzen der glühenden Teilchen u.dgl.

Bei einer Bearbeitungsmaschine, deren Kühlvorrichtung im Bereich der Eintrittsöffnung für den Schneidstrahl wenigstens ein Rohr oder Gehäuse mit quer zur Werkstückebene verlaufender Bohrung aufweist, sieht eine Weiterbildung der Erfindung vor, dass die Rohr- oder Gehäusewandung von zumindest einem Zuführungskanal für die Kühlflüssigkeit durchsetzt ist, dessen Austrittsende schräg, insbesondere tangential zur Rohrinnenwandung oder Bohrung verläuft, und dessen äusseres Ende mit einer Fördervorrichtung für die Kühlflüssigkeit verbunden ist. Wenn man die Kühlflüssigkeit im Bereich der Eintrittsöffnung für den Schneidstrahl einspeist, so kann die Längsachse des Zuführungskanals senkrecht zu derjenigen des Rohres bzw. der Gehäusebohrung verlaufen, also beispielsweise horizontal angeordnet sein. Ausserdem wird man zweckmässigerweise nicht nur eine, sondern mehrere, vorzugsweise gleichmässig am Umfang verteilte Zuführungskanäle für die Kühlflüssigkeit vorsehen, um einen starken Drall des Kühlflüssigkeitsmantels zu erzielen.

In weiterer Ausgestaltung der Erfindung ist vorgesehen, dass in die Bohrung des Gehäuses oder Rohres ein Innenrohr mit Abstand eingesetzt ist, dessen dem Werkstück zugeordnetes Ende zur Bildung eines Umlenkspalts von einem Innenbund des Gehäuses oder äusseren Rohres übergriffen ist. Wenn man den Spaltraum zwischen den beiden Rohren am unteren Ende absperrt oder absperrbar ausbildet, so strömt die in den Spaltraum eingetretene Kühlflüssigkeit nach oben und über den Umlenkspalt ins Innere des Innenrohres. Dabei wird die Rotation dieses rohrförmigen Flüssigkeitsmantels zumindest weitgehend erhalten, so dass die Kühlflüssigkeit auch im Innern des Innenrohres entlang dessen innerer Mantelfläche unter starker Rotation abwärts fliesst.

Bei einer Bearbeitungsmaschine mit mehreren schrägen Zuführungskanälen gehen letztere in vorteilhafter Weise von einem Ringkanal aus, der mit einer Speiseleitung für das Kühlmittel verbunden ist. Damit reicht eine einzige Verbindungsleitung zwischen einem Vorratsbehälter für das Kühlmittel und der Kühlvorrichtung aus. In diesen Vorratsbehälter kann das Kühlmittel gegebenenfalls nach vorheriger Reinigung wieder zurückfliessen.

Eine andere Variante der Erfindung sieht vor, dass sich im Bereich der Eintrittsöffnung für den Schneidstrahl eine antreibbare Vorrichtung zur Erzeugung des rotierenden Kühlflüssigkeitsmantels befindet, die mit einer Speiseleitung für die Kühlflüssigkeit verbunden ist. Dabei kann es sich um ein Leitflächen aufweisendes Rad handeln, das entweder mit Hilfskraft oder durch die Kühlflüssigkeit selbst angetrieben wird.

Gemäss einer anderen Ausführungsform der Erfindung wird bei einer Bearbeitungsmaschine, bei der die Kühlvorrichtung im Bereich der Eintrittsöffnung für den Schneidstrahl aus zwei konzentrisch mit Abstand angeordneten, etwa vertikalen Rohren besteht, wobei das Kühlmittel über den Ringraum zwischen beiden zugeführt, über das vom Werkstück abgewandte Ende des Innenrohres abgeführt und an dem dem Werkstück zugeordneten Rohrenden umgelenkt wird, vorgeschlagen, dass sich im ringförmigen Spaltraum zwischen den Rohren den Drall des Kühlflüssigkeitsmantels erzeugende Leitbleche oder eine drehbare Rotationsvorrichtung für den aufsteigenden Kühlflüssigkeitsmantel befindet. Die Leitbleche bzw. die drehbare Rotationsvorrichtung haben auch bei dieser Ausführungsform der Erfindung den Zweck, die Rotation des Kühlflüssigkeitsmantels zu erzeugen oder zu verstärken, wobei jedoch im Gegensatz zu der vorerwähnten Variante der Erfindung die Kühlflüssigkeit zunächst noch zur Eintrittsöffnung für den Schneidstrahl fliessen muss und dort um vorzugsweise 180° umgelenkt wird.

Eine andere bevorzugte Ausführungsform der Erfindung ist dadurch gekennzeichnet, dass sich der rotierende Kühlflüssigkeitsmantel im Innern eines topfförmigen, zur Erzeugung des Kühlflüssigkeitsmantels antreibbaren Gehäuses befindet, dessen Topfrand der Werkstückunterseite im Schneidbereich zugeordnet ist, wobei sich im Topfboden des antreibbaren Gehäuses eine, insbesondere zentrische, Zuführungsbohrung für die Kühlflüssigkeit befindet. Die Kühlflüssigkeit steigt an der Innenwandung des Mantels hoch, sobald man dieses Gehäuse in Drehung versetzt.

Bei genügend hoher Drehzahl tritt die Kühlflüssigkeit über den Topfrand aus und dem Gehäuse wird über den Topfboden Kühlflüssigkeit geringerer Temperatur zugeführt. So können verhältnismässig viel Wärmeenergie und auch feste, vom Plasmaschneiden herrührende Teilchen abgeführt werden.

Wenn man den unkontrollierten Abfluss der über den Topfrand ausgetretenen Kühlflüssigkeit nicht wünscht, so ist es in Weiterbildung der Erfindung sehr zweckmässig, wenn das antreibbare Gehäuse von einem rohrförmigen Mantel mit Abstand umgeben ist, dessen unteres Ende als Abfluss ausgebildet oder mit einem Abflussstutzen versehen ist. Zumindest im letzteren Falle wird auch der rohrförmige Mantel unten von einem zumindest ringförmigen Topfboden verschlossen sein. Dieser oder der Mantel im Bereich des Bodens ist dann mit dem Abflussstutzen ausgestattet. Denkbar ist auch die Verwendung eines Doppelmantels, wobei der Innenmantel etwas kürzer gehalten und von einem Aussenrand des antreibbaren Gehäuses übergriffen ist. Man erspart sich dadurch gegebenenfalls eine Abdichtung zwischen dem antreibbaren Gehäuse und dem feststehenden Mantel.

In der Zeichnung ist ein Ausführungsbeispiel der Erfindung dargestellt. Es zeigen:

Fig. 1 perspektivisch ein Ausführungsbeispiel der Maschine,
Fig. 2 eine abgebrochene Darstellung eines Radialmittelschnitts im Bereich des Brennstrahls,

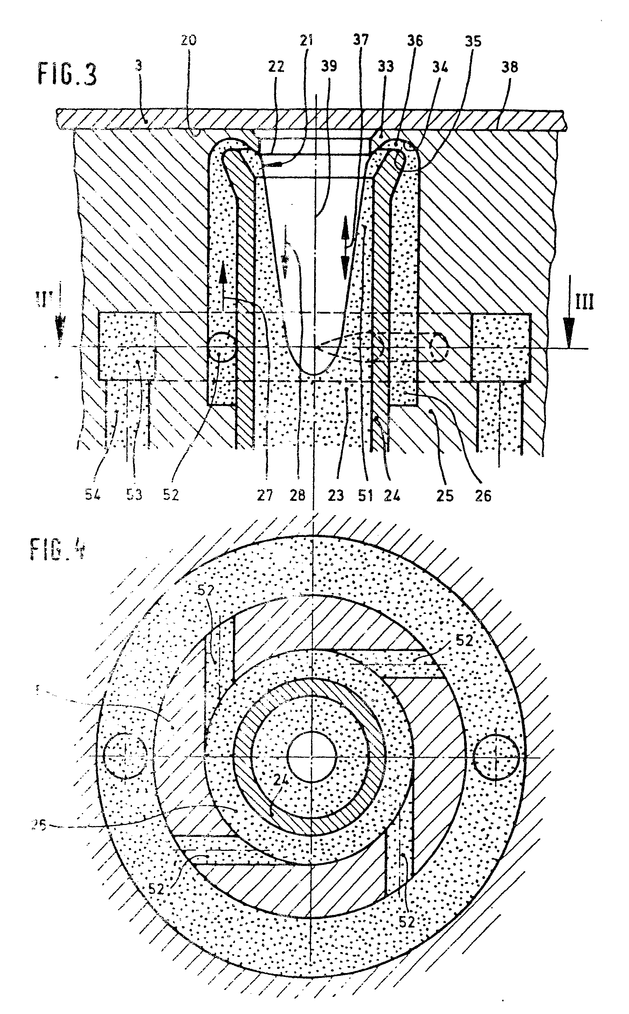

Fig. 3 eine abgebrochene Darstellung eines zweiten Ausführungsbeispiels in einem Radialmittelschnitt im Bereich des Schneidstrahls,
Fig. 4 einen Schnitt gemäss der Linie III–III der Fig. 2,
Fig. 5 einen Längsmittelschnitt einer dritten Variante,
Fig. 6 einen Längsmittelschnitt einer vierten Ausführungsform.

An dem im wesentlichen etwa C-förmigen Maschinenkörper 1 befindet sich eine Koordinatenführung 2 für das Werkstück 3, die eine Längsführung 4 und eine Querführung 5 umfasst. Dabei besteht dann ihrerseits die Längsführung 4 aus einer fest mit dem Maschinenkörper 1 verbundenen Laufschiene 6 und einem daran im Sinne des Doppelpfeils 7 verschiebbar geführten Laufwagen 8. Die Verschiebebewegung erzielt man vorzugsweise mit Hilfe eines Antriebsmotors 9, der ein Ritzel 10 dreht. Dieses greift in eine Verzahnung der als Zahnstange ausgebildeten Laufschiene 6 ein.

Der Laufwagen 8 trägt noch einen zweiten Antriebsmotor 11 mit Ritzel 12. Dessen Zähne kämmen mit denjenigen einer Tragschiene 13, die ebenfalls, wenigstens zum Teil, als Zahnstange gestaltet ist oder eine solche hält. Mit Hilfe des zweiten Antriebsmotors 11 kann man die Tragschiene 13 im Sinne des Doppelpfeils 14 hin- und herverschieben. Die beiden Bewegungsrichtungen 7 und 14 verlaufen senkrecht zueinander.

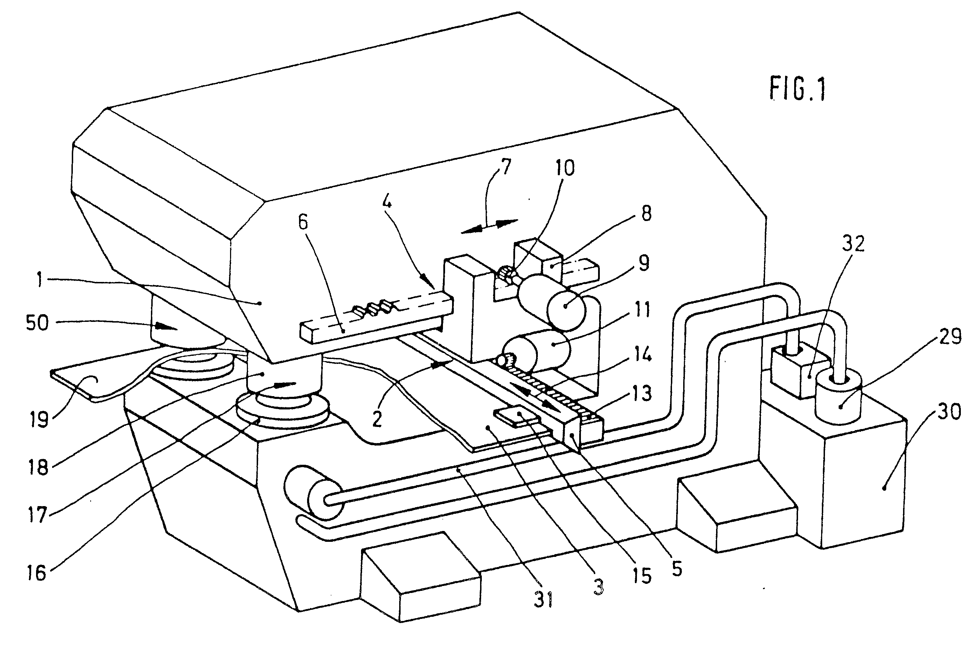

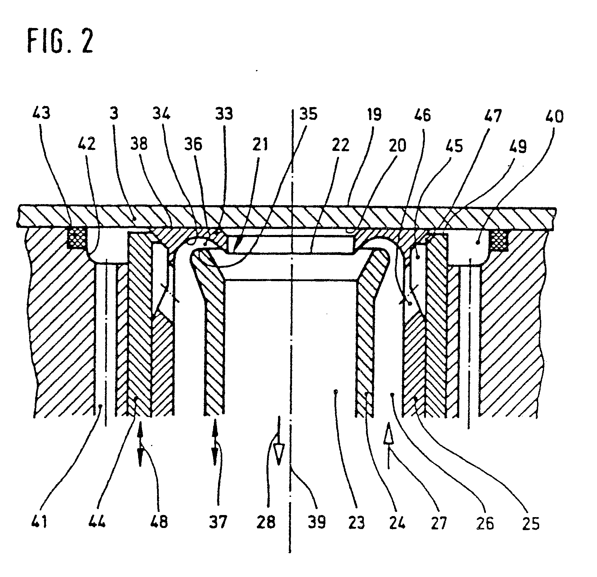

An der Tragschiene 13 befinden sich vorzugsweise zwei Pratzenpaare 15, zwischen denen das plattenförmige Werkstück 3 eingeklemmt ist und von denen in Fig. 1 eine zu sehen ist. Es leuchtet ohne weiteres ein, dass das Werkstück mit Hilfe des Antriebsmotors 9 eine Verschiebebewegung im Sinne des Doppelpfeils 7 und mittels des Antriebsmotors 11 eine Verstellbewegung in Richtung des Doppelpfeils 14 ausführt. Bei gleichzeitigem Lauf beider Motoren 9, 11 erzielt man eine überlagerte Längs- und Querbewegung. Das Werkstück 3 stützt sich ausserdem noch auf dem Unterteil 16 einer thermischen Schneideinrichtung 17, insbesondere einer Plasma-Schneideinrichtung, ab, deren Oberteil mit 18 bezeichnet ist. Letzteres umfasst eine Schneidstrahldüse, aus welcher der Schneidbrennstrahl austritt, der auf der Oberseite 19 des Werkstücks 3 auftrifft und das Werkstück an der betreffenden Stelle durchschmilzt. An der Unterseite 20 (Fig. 2) tritt der Schneidbrennstrahl wieder aus.

Der strahlabgewandten Seite des Werkstücks 3, nämlich der Unterseite 20, ist eine Kühlvorrichtung 21 für einen geführten Kühlmitteltransport zugeordnet. Diese Kühlvorrichtung 21 besitzt gegenüberliegend von der Schneidstrahldüse oder einem anderen, den Schneidstrahl abgebenden Organ, eine Eintrittsöffnung 22, über welche der Schneidstrahl in das Kühlmittel 23 gelangt. Letzteres schluckt gewissermassen sowohl den Strahl als auch die mitgeführten Gase, Dämpfe und beim Brennen entstandenen Partikelchen. Sie werden mit Hilfe des Kühlmittels abtransportiert. Zumindest im Bereich der Eintrittsöffnung 22 besteht die Kühlvorrichtung aus zwei konzentrisch angeordneten Rohren, von denen das innere mit 24 und das äussere mit 25 bezeichnet ist. Zwischen beiden entsteht ein ringförmiger Spaltraum 26, über welchen beim Ausführungsbeispiel das Kühlmittel 23 im Sinne des Pfeils 27 zugeführt wird. In diesem Falle verläuft dann die Abströmrichtung durch das innere Rohr 24 in Richtung des Pfeils 28. Dem ringförmigen Spaltraum 26 wird das Kühlmittel mittels einer Pumpe 29 zugeführt. Diese saugt es aus einem Behälter 30 an. Das innere Rohr 24 ist über eine Leitung 31 mit einer Flüssigkeitsabsaugvorrichtung 32 verbunden, welche den raschen Rücktransport des Kühlmittels gewährleistet und in den Behälter 30 fördert.

Das werkstückseitige freie Ende des äusseren Rohrs 25 übergreift mit einem Innenbund 33 das werkstückseitige freie Ende des inneren Rohres 24. Dabei sind die Innendurchmesser des Innenbunds 33 und des inneren Rohres 24, wie Fig. 2 der Zeichnung zeigt, etwa gleich gross. Ausserdem verläuft gemäss der Zeichnung die Innenkontur des äusseren Rohres 25 mit seinem Innenbund 33 an seinem werkstückseitigen freien Ende in einem Bogen 34. Dadurch erfährt das ankommende Kühlwasser eine Umlenkung um zumindest annähernd etwa 180°. Zweckmässigerweise ist auch das werkstückseitige freie Ende des inneren Rohres 24 mit einem bogenförmigen Querschnitt 35 versehen. Dadurch entsteht ein strömungsgünstiger Umlenkspalt 36. Das Einströmen in das innere Rohr 24 kann dadurch noch etwas verbessert werden, dass man das werkstückseitige freie Ende des inneren Rohres 24 gemäss dem Ausführungsbeispiel trichterförmig etwas aufweitet. Wenn man gemäss dem Doppelpfeil 37 das innere Rohr 24 verstellbar ausbildet, so kann man den Querschnitt des Umlenkspalts 36 verändern und damit Einfluss auf die Verhältnisse beim Überströmen vom ringförmigen Spaltraum 26 ins innere Rohr 24 nehmen.

Die Stirnseite 38 des äusseren Rohres 25 verläuft senkrecht zur Rohrachse 39 und bildet wenigstens einen Teil der Abstützfläche für das Werkstück 3.

Das äussere Rohr 25 ist konzentrisch von einem rinnenartigen, durch das Werkstück 3 abdeckbaren Flüssigkeitskanal 40 umgeben. Diesem wird Flüssigkeit in geeigneter Weise zugeführt und beispielsweise über eine oder mehrere, insbesondere zur Rohrachse 29 parallele Bohrungen 41, wieder abgeführt. Dieser Flüssigkeitskanal ist vollständig gefüllt, so dass die Flüssigkeit bis an die Unterseite 20 des Werkstücks 3 heranreicht. Damit sie nicht in radialer Richtung abströmt, ist die äussere Rinnenwandung 42 teilweise durch einen Dichtring 43 gebildet, der einen dichten Abschluss zur Unterseite 20 des Werkstücks 3 herstellt.

Die Flüssigkeit im rinnenförmigen Flüssigkeitskanal 40 bildet eine gute Schalldämmung, so dass der beim Brennschneiden und auch beim Eintritt des Schneidstrahls in das Kühlmittel 23 entstehende Lärm nicht oder allenfalls in gedämpfter Form austreten kann. Wenn man keine separate Zuführungsleitung zum Flüssigkeitskanal 40 vorsehen will, so kann man ihn in zweckmässiger Weise mit der Zuführungsleitung der Kühlvorrichtung 21 hydraulisch verbinden. Im Falle einer Zuführung des Kühlmittels über den ringförmigen Spaltraum 26 bietet sich eine hydraulische Verbindung zwischen diesem Spaltraum 26 und dem Flüssigkeitskanal 40 an. Dabei ist es besonders vorteilhaft, dass das äussere Rohr 25 der Kühlvorrichtung 21 konzentrisch von einem dritten Rohr 44 umgeben ist. Durch letzteres und das äussere Rohr 25 wird ein Ringraum 45 geschaffen, dem das Kühlmittel über mehrere, insbesondere gleichmässig am Umfang verteilte Kanäle 46, zuströmt. Der Ringraum 45 steht über einen ringförmigen Spaltraum 47 mit dem Flüssigkeitskanal 40 in hydraulischer Verbindung. Wenn man das dritte Rohr 44 im Sinne des Doppelpfeils 48 verschiebbar ausbildet, so kann man die Grösse des ringförmigen Spaltraums 47 variieren. Im übrigen überströmt das aus dem ringförmigen Spaltraum 47 austretende flüssige Medium die Stirnkante 49 des dritten Rohres 44. Nach oben hin erfolgt die Abgrenzung durch die Unterseite 20 des Werkstücks 3. Eine gemeinsame Zuführung der Flüssigkeit zur Kühlvorrichtung 21 und zum Flüssigkeitskanal 40 hat den Vorteil, dass man eine Leitung einsparen kann. Andererseits kann aber eine separate Zuführungsleitung für den Flüssigkeitskanal 40 durchaus zweckmässig sein, wenn man sehr unterschiedliche Strömungsmengen im Flüssigkeitskanal 40 und im inneren Rohr 24 wünscht. In gleicher Weise wie beim inneren Rohr 24 kann man die Flüssigkeit auch aus der oder den Bohrungen 41 mittels einer Pumpe od. dgl. absaugen, jedoch ist es dann zweckmässig, wenn man bei mehreren Bohrungen diese zuvor in einen nicht gezeigten Ringkanal münden lässt, von dem aus eine Saugleitung zu dieser Pumpe führt.

Im seitlichen Abstand von der thermischen Schneideinrichtung 17 ist noch eine Stanz- oder Nibbelvorrichtung 50 vorgesehen, mit der man das Werkstück 3 zusätzlich oder alternativ stanzen oder nibbeln kann. Eine derartige Stanz- oder Nibbelmaschine kann von herkömmlicher Konstruktion sein, so dass sich weitere Beschreibungen und auch die Darstellungen erübrigen. Die Koordinatenführung 2 würde natürlich auch beim Stanzen und Nibbeln benutzt werden, und im Falle einer automatischen Steuerung müsste die Automatik den seitlichen Abstand der Rohrachse 39 von der Längsmittelachse des Stanz- oder Nibbelwerkzeugs berücksichtigen.

In der Kühlvorrichtung, d.h. genauer gesagt, beim Ausführungsbeispiel im Innern des inneren Rohres 24, befindet sich ein rotierender Kühlflüssigkeitsmantel 51. Die Rotation erreicht man in der nachfolgend beschriebenen Weise. Die Dicke des Kühlflüssigkeitsmantels richtet sich zunächst einmal nach der Stärke des Umlenkspalts 36. Sie kann mit zunehmender Entfernung von der Eintrittsöffnung 22 zunehmen, wobei dann zugleich die Rotation abnimmt. Schliesslich wird die Kühlflüssigkeit das gesamte Innere des Innenrohres 24 ausfüllen. Der Brennstrahl tritt nun mit seinen Partikelchen und Gasen in das «Auge» dieser rotierenden Kühlflüssigkeit und wird von dieser «geschluckt». Dabei kühlen sich dann die Gase und mitgeführten, vom Plasmaschneiden herrührenden Materialteilchen ab, und sie werden am unteren Ende des inneren Rohres zusammen mit der Kühlflüssigkeit abgezogen.

Die Rotation des Kühlflüssigkeitsmantels erreicht man beim gezeigten Ausführungsbeispiel dadurch, dass die Kühlflüssigkeit über vier gleichmässig am Umfang verteilte Zuführungskanäle in den ringförmigen Spaltraum 26 zwischen dem inneren und dem äusseren Rohr einströmen lässt. Diese Zuführungskanäle sind so angeordnet, dass die Flüssigkeit etwa tangential in diesen Spaltraum einfliesst. Die Zuführungskanäle 52 gehen von einem Ringkanal 53 aus, der mit einer Speiseleitung 54 für das Kühlmittel verbunden ist, die Anschluss an den Behälter 30 hat.

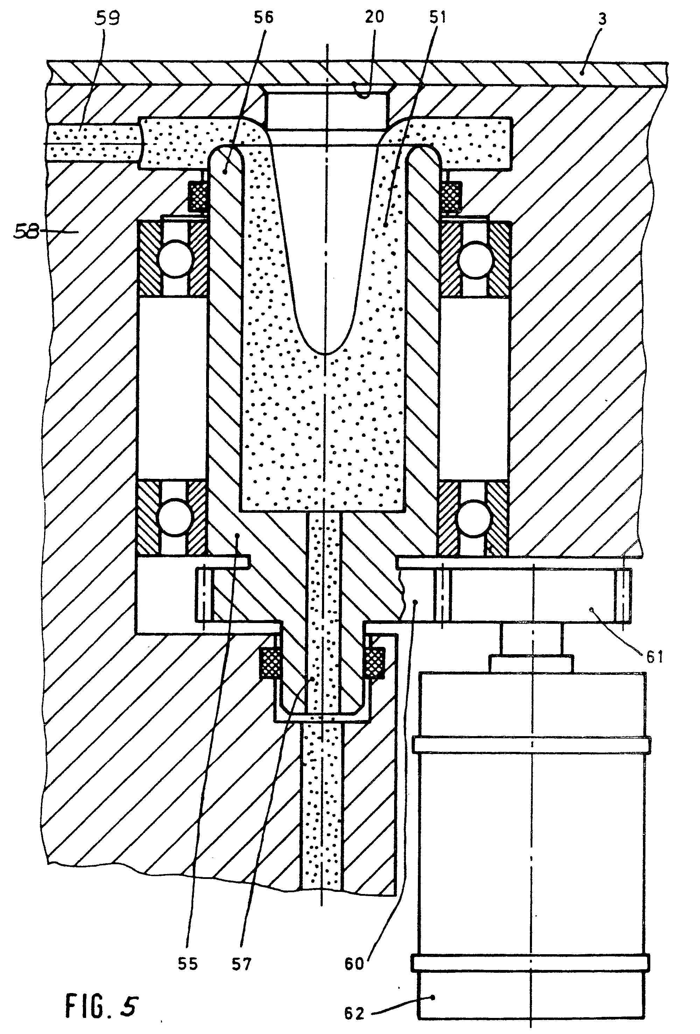

Bei der weiteren, in Fig. 5 dargestellten Ausführungsform der Erfindung, weist der Topfboden des antreibbaren Gehäuses 55 eine zentrische Zuführungsbohrung 57 für die Kühlflüssigkeit auf. Das Gehäuse wird dabei derart in Drehung versetzt, dass die Kühlflüssigkeit über den Topfrand 56 übertritt. Dabei müssen natürlich die Drehzahl und die zugeführte Kühlflüssigkeitsmenge aufeinander abgestimmt sein, damit der Kühlflüssigkeitsmantel stets in etwa gleicher Stärke erhalten bleibt.

In der Regel wünscht man keinen unkontrollierten Abfluss der Kühlflüssigkeit, insbesondere dann nicht, wenn sie kein reines Wasser ist und infolgedessen aufbereitet und wieder zugeführt werden soll. Deshalb ist beim dritten Ausführungsbeispiel das antreibbare Gehäuse 55 von einem rohrförmigen Mantel 58 mit Abstand umgeben, dessen unteres Ende einen Abflussstutzen 59 trägt. Dabei wird dann das untere Ende des Mantels mit einem Innenbund versehen, welcher den Spaltraum zwischen dem antreibbaren Gehäuse und dem diesen mit Abstand umgebenden rohrförmigen Mantel verschliesst, wobei wegen der Relativgeschwindigkeit für eine Abdichtung im Bereich des unteren Endes des Mantels 58 gesorgt werden muss. Bei einem Doppelmantel ist, wie vorstehend beschrieben wurde, auch eine labyrinthartige Dichtung im Bereich des Topfrandes 56 des Gehäuses 55 möglich.

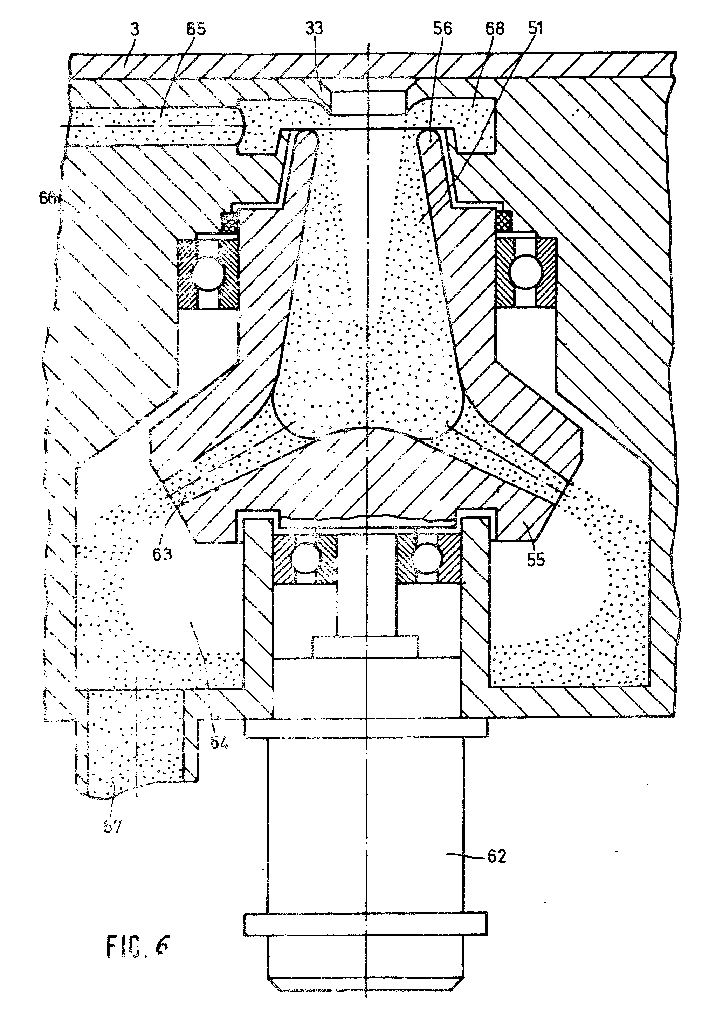

Gemäss einer weiteren, in Fig. 6 gezeigten Variante der Erfindung weist das antreibbare Gehäuse 55 in seinem unteren Bereich mehrere radiale, schräg nach aussen unten gerichtete Abflusskanäle 63 auf, die sich beispielsweise gegen ihr freies Ende hin verengen können. Ausserdem ist bei dieser Ausführungsform vorgesehen, dass sich auch der Innenmantel des antreibbaren Gehäuses 55 gegen den Topfrand 56 hin verengt. Die Kühlflüssigkeit wird dem Innern des antreibbaren Gehäuses 55 von oben her zugeführt, und zwar über eine Zuführungsleitung 65 oder einen dementsprechenden Gehäusekanal. Um ein gleichmässigeres Einbringen zu gewährleisten, ist es sehr von Vorteil, dass das Austrittsende der Zuführungsleitung 65 bzw. eines dementsprechenden Gehäusekanals, die Kühlflüssigkeit zunächst in einen oberhalb des antreibbaren Gehäuses 55 gelegenen und zu diesem konzentrischen Ringraum 68 einspeist. Der innere Austritt aus diesem Ringraum 68 ist, wie die Zeichnung zeigt, zweckmässigerweise bogenförmig nach innen unten gerichtet.

Das feststehende äussere Gehäuse 66, welches den erwähnten Ringraum 68 aufweist, bildet zugleich auch noch einen Auffangraum 64 für die aus den Abflusskanälen 63 herausgeschleuderte Kühlflüssigkeit. Sie wird in diesem Auffangraum gesammelt und über eine schematisch eingezeichnete Abflussbohrung 67 abgeführt. Nach entsprechender Aufbereitung, insbesondere Reinigung und Abkühlung, kann sie über die Zuführungsleitung 65 wieder eingespeist werden.

Im übrigen zeigt die Fig. 6 auch noch den elektrischen Antriebsmotor 62 und die Lagerung für das antreibbare Gehäuse 55, welche dort von zwei Kugellagern übernommen wird. Die Zwischenschaltung eines Getriebes bzw. zweier Ritzel 60 und 61, die in Fig. 6 gezeigt sind, ist beim Ausführungsbeispiel gemäss Fig. 7 nicht vorgesehen.

**Patentansprüche**

1. Bearbeitungsmaschine für flache Werkstükke, mit einer thermischen Schneidstrahleinrichtung, insbesondere Plasmaschneidstrahleinrichtung, sowie einer Bewegungsvorrichtung für das Werkstück gegenüber dem Schneidstrahl, dadurch gekennzeichnet, dass der strahlabgewandten Seite (20) des Werkstücks (3) eine Kühlvorrichtung (21) für geführten Kühlmitteltransport zugeordnet ist, die der Schneidstrahlaustrittsöffnung gegenüberliegend, eine Eintrittsöffnung (22) für den Schneidstrahl aufweist, und dass die Kühlvorrichtung (21) im Bereich der Eintrittsöffnung (22) für den Schneidstrahl aus zwei konzentrisch angeordneten Rohren (24, 25) oder Gehäuseteilen (55, 58, 66) besteht, von denen wenigstens eines mit einer Fördervorrichtung (29, 32) für das flüssige Kühlmittel verbunden ist.

2. Maschine nach Anspruch 1, dadurch gekennzeichnet, dass das äussere Rohr (25) mit der als Druckpumpe (29) ausgebildeten Fördervorrichtung für das Kühlmittel (23) und das innere Rohr (24) mit einer Flüssigkeitsabsaugvorrichtung (32) verbunden sind.

3. Maschine nach Anspruch 2, dadurch gekennzeichnet, dass das werkstückseitige freie Ende des äusseren Rohres (25) mit einem Innenbund (33) dasjenige des inneren Rohres (24) übergreift, wobei die Innendurchmesser des Innenbundes und des inneren Rohres etwa gleich gross sind.

4. Maschine nach Anspruch 3, dadurch gekennzeichnet, dass im Längsschnitt (Fig. 2, 3) die Innenkontur des äusseren Rohres (25) an seinem werkstückseitigen freien Ende bogenförmig (34), insbesondere etwa halbkreisförmig verläuft und das werkstückseitige freie Ende des inneren Rohres (24) ebenfalls einen bogenförmigen Querschnitt aufweist.

5. Maschine nach Anspruch 4, dadurch gekennzeichnet, dass das werkstückseitige freie Ende des inneren Rohres (24) trichterförmig etwas aufgeweitet ist.

6. Maschine nach einem oder mehreren der Ansprüche 3 bis 5, dadurch gekennzeichnet, dass wenigstens eines der beiden konzentrischen Rohre (24, 25), insbesondere das innere, in Achsrichtung verschiebbar ist.

7. Maschine nach einem oder mehreren der vorhergehenden Ansprüche, dadurch gekennzeichnet, dass die Stirnseite des äusseren Rohres (25) senkrecht zur Rohrachse (39) verläuft und wenigstens einen Teil der Abstützfläche für das Werkstück (3) bildet.

8. Maschine nach einem oder mehreren der vorhergehenden Ansprüche, gekennzeichnet durch einen das äussere Rohr (25) zumindest an seinem werkstückseitigen Ende konzentrisch umgebenden, rinnenartigen, durch das Werkstück (3) abdeckbaren, mit je einem Zu- und Abfluss versehenen Flüssigkeitskanal (40).

9. Maschine nach Anspruch 8, dadurch gekennzeichnet, dass der Zufluss des rinnenförmigen Flüssigkeitskanals (40) mit dem Ringraum (26) zwischen dem inneren (24) und äusseren Rohr (25) der Kühlvorrichtung (21) hydraulisch verbunden ist.

10. Maschine nach Anspruch 8 oder 9, dadurch gekennzeichnet, dass die innere Rinnenwandung des rinnenförmigen, ringförmigen Flüssigkeitskanals (40) durch ein das äussere Rohr (25) der Kühlvorrichtung (21) konzentrisch umgebendes drittes Rohr (44) gebildet ist.

11. Maschine nach Anspruch 10, dadurch gekennzeichnet, dass das dritte Rohr (44) in Achsrichtung (39) verschiebbar ist.

12. Maschine nach einem oder mehreren der Ansprüche 8 bis 11, dadurch gekennzeichnet, dass die äussere Rinnenwandung (42) des rinnenförmigen, ringförmigen Flüssigkeitskanals (40) wenigstens zum Teil durch die Innenfläche eines Dichtrings (43) gebildet oder der Flüssigkeitskanal (40) von einem Dichtring konzentrisch umgeben ist, dessen gegen das Werkstück (3) weisende Fläche eine ringförmige Dichtfläche bildet.

13. Maschine nach einem oder mehreren der Ansprüche 8 bis 12, dadurch gekennzeichnet, dass der rinnenförmige Flüssigkeitskanal (40) über wenigstens eine hydraulische Leitung (41) mit einer Saugpumpe oder einem Flüssigkeitsbehälter verbunden ist.

14. Maschine nach einem oder mehreren der Ansprüche 8 bis 13, dadurch gekennzeichnet, dass der rinnenförmige Flüssigkeitskanal (40) hydraulisch (46, 45, 47, 49) mit der Kühlvorrichtung (21), insbesondere deren ringförmigem Spaltraum (26) verbunden ist.

15. Maschine nach einem oder mehreren der vorhergehenden Ansprüche, dadurch gekennzeichnet, dass die thermische Schneidstrahleinrichtung (17) im seitlichen Abstand von einer Stanz- oder Nibbelvorrichtung der Bearbeitungsmaschine angeordnet ist.

16. Maschine nach wenigstens einem der vorhergehenden Ansprüche, gekennzeichnet durch einen rotierenden Kühlflüssigkeitsmantel (51) in der Kühlvorrichtung (21), dessen dem Werkstück (3) zugeordnetes Ende die Eintrittsöffnung (22) für den Schneidstrahl bildet.

17. Maschine nach Anspruch 16, deren Kühlvorrichtung im Bereich der Eintrittsöffnung für den Schneidstrahl wenigstens ein Rohr (25) (Fig. 3, 4) oder Gehäuse mit quer zur Werkstückebene verlaufender Bohrung aufweist, dadurch gekennzeichnet, dass die Rohr- oder Gehäusewandung von zumindest einem Zuführungskanal (52) für die Kühlflüssigkeit durchsetzt ist, dessen Austrittsende schräg, insbesondere tangential zur Rohrinnenwandung oder Bohrung verläuft und dessen äusseres Ende mit einer Fördervorrichtung (29) für die Kühlflüssigkeit verbunden ist.

18. Maschine nach Anspruch 17, dadurch gekennzeichnet, dass in die Bohrung des Gehäuses oder Rohres (25) ein Innenrohr (24) mit Abstand eingesetzt ist, dessen dem Werkstück (3) zugeordnetes Ende zur Bildung eines Umlenkspalts (36) von einem Innenbund (33) des Gehäuses oder äusseren Rohres (25) übergriffen ist.

19. Maschine nach Anspruch 17 oder 18, mit mehreren schrägen Zuführungskanälen, dadurch gekennzeichnet, dass die Zuführungskanäle (52) von einem Ringkanal (53) ausgehen, der mit einer Speiseleitung (54) für die Kühlflüssigkeit verbunden ist.

20. Maschine nach Anspruch 16, dadurch gekennzeichnet, dass sich im Bereich der Eintrittsöffnung (22) für den Schneidstrahl eine antreibbare Vorrichtung (55) zur Erzeugung des rotierenden Kühlflüssigkeitsmantels (51) befindet, die mit einer Speiseleitung (54) für die Kühlflüssigkeit verbunden ist.

21. Maschine nach Anspruch 16, bei der die Kühlvorrichtung im Bereich der Eintrittsöffnung für den Schneidstrahl aus zwei konzentrisch mit Abstand angeordneten, etwa vertikalen Rohren besteht, wobei das Kühlmittel über den Ringraum zwischen beiden zugeführt, über das vom Werkstück abgewandte Ende des Innenrohres abgeführt und an den dem Werkstück zugeordneten Rohrenden umgelenkt wird, dadurch gekennzeichnet, dass sich im ringförmigen Spaltraum (26) zwischen den Rohren (24, 25) den Drall des Kühlflüssigkeitsmantels (51) erzeugende Leitbleche oder eine drehbare Rotationsvorrichtung für den aufsteigenden Kühlflüssigkeitsmantel befindet.

22. Maschine nach Anspruch 16, dadurch gekennzeichnet, dass sich der rotierende Kühlflüssigkeitsmantel (51) im Innern eines topfförmigen, zur Erzeugung des Kühlflüssigkeitsmantels antreibbaren Gehäuses (55) befindet, dessen Topfrand (56) der Werkstückunterseite (20) im Schneidbereich zugeordnet ist, wobei sich im Topfboden des antreibbaren Gehäuses (55) eine, insbesondere zentrische, Zuführungsbohrung (57) für die Kühlflüssigkeit befindet.

23. Maschine nach Anspruch 22, dadurch gekennzeichnet, dass das antreibbare Gehäuse (55) von einem feststehenden, insbesondere rohrförmigen Mantel oder einem Gehäuse (58) umgeben ist, der bzw. das eine Abflussbohrung (59) aufweist.

24. Maschine nach Anspruch 22, dadurch gekennzeichnet, dass das antreibbare Gehäuse (55) in seinem unteren Bereich wenigstens einen etwa radialen Abflusskanal (63) aufweist und dem Topfrand (56) das Austrittsende einer Zuführungsleitung (65) für die Kühlflüssigkeit zugeordnet ist.

25. Maschine nach Anspruch 24, dadurch gekennzeichnet, dass das Austrittsende der Zuführungsleitung (65) für die Kühlflüssigkeit in einen oberhalb des antreibbaren Gehäuses (55) gelegenen Ringraum (68) eines feststehenden äusseren Gehäuses (66) mündet, das im Bereich des oder der radialen Abflusskanäle (63) einen Auffangraum (64) mit Abflussbohrungen (67) für die Kühlflüssigkeit bildet.

**Claims**

1. Machine for the machining of flat workpieces, having a thermal cutting beam device, particularly a plasma cutting beam device, as well as a device for moving the workpiece in relation to the cutting beam, characterised in that the side (20) of the workpiece (3) which is remote from the beam has associated with it a cooling device (21) for the guided conveyance of coolant and which, situated opposite the cutting beam emergence orifice, has an aperture (22) for receiving the cutting beam, and in that the cooling device (21) in the region of the inlet aperture (22) for the cutting beam, consists of two concentrically disposed tubes (24, 25) or housing parts (55, 58, 66) of which at least one is connected to a device (29, 32) for conveying the liquid coolant.

2. A machine according to Claim 1, characterised in that the outer tube (25) is connected to the coolant (23) conveying device, which is constructed as a pressure pump (29) while the inner tube (24) is connected to a liquid vacuum extraction device (32).

3. A machine according to Claim 2, characterised in that the free end of the outer tube (25) which is towards the workpiece has an inner collar (33) which engages over that of the inner tube (24), the inside diameter of the inner collar and of the inner tube being approximately the same size.

4. A machine according to Claim 3, characterised in that in a longitudinal section (fig. 2, 3), the inner contours of the outer tube (25), at its free end which is towards the workpiece, are arcuate (34), extending particularly more or less semicircularly, the free end of the inner tube (24), towards the workpiece, likewise having an arcuate cross-section.

5. A machine according to Claim 4, characterised in that the free end of the inner tube (24) which is towards the workpiece is widened out somewhat so as to be funnel-shaped.

6. Machine according to one or more of Claims 3 to 5, characterised in that at least one of the two concentric tubes (24, 25), particularly the inner tube, is displaceable in an axial direction.

7. Machine according to one or more of the preceding Claims, characterised in that the end face of the outer tube (25) extends at a right angle to the tube axis (39) and forms at least a part of the surface which supports the workpiece (3).

8. Machine according to one or more of the preceding Claims, characterised by a channel-like liquid duct (40) which concentrically encloses the outer tube (25), at least at its end which is towards the workpiece, the liquid duct (40) being adapted to be masked by the workpiece (3) and being provided with an inlet and an outlet.

9. A machine according to Claim 8, characterised in that the inlet to the channel-like liquid duct (40) is hydraulically connected to the annular space (26) between the inner (24) and outer (25) tube of the cooling device (21).

10. A machine according to Claim 8 or 9, characterised in that the inner channelled wall of the channel-like annular liquid duct (40) is constituted by a third tube (44) which concentrically encloses the outer tube (25) of the cooling device (21).

11. A machine according to Claim 10, characterised in that the third tube (44) is displaceable in an axial direction (39).

12. Machine according to one or more of Claims 8 to 11, characterised in that the outer channel wall (42) of the annular channel-shaped liquid duct (40) is at least partially constituted by the inside face of a sealing ring (43) or in that the liquid duct (40) is enclosed, concentrically by a sealing ring, of which the face which is towards the workpiece (3) forms an annular sealing face.

13. Machine according to one or more of Claims 8 to 12, characterised in that the channel-shaped liquid duct (40) is connected by at least one hydraulic line (41) to a suction pump or a liquid container.

14. Machine according to one or more of Claims 8 to 13, characterised in that the channel-shaped liquid duct (40) is hydraulically (46, 45, 47, 49) connected to the cooling apparatus (21) particularly the annular gap (26) thereof.

15. Machine according to one or more of the preceding Claims, characterised in that the thermal cutting beam device (17) is disposed at a lateral distance from a stamping or nibbling device of the machine.

16. Machine according to at least one of the preceding Claims, characterised by a rotating cooling liquid casing (51) in the cooling apparatus (21), of which the end associated with the workpiece (3) forms the inlet aperture (22) for the cutting beam.

17. A machine according to Claim 16, of which the cooling device, in the region of the inlet aperture for the cutting beam has at least one tube (25), fig. 3, 4) or housing with a bore extending transversely of the workpiece plane, characterised in that the tube or housing wall has passing through it at least one supply duct (52) for cooling liquid, the outlet end of which extends obliquely, in particular tangentially to the inside wall of the tube or bore and of which the outer end is connected to a coolant conveying device (29).

18. A machine according to Claim 17, characterised in that inserted into and at a distance from the bore in the housing or tube (25) is an inner tube (24), of which the end associated with the workpiece (3) is, to form a deflecting gap (36), enclosed in an inner collar (33) of the housing or outer tube (25).

19. A machine according to Claim 17 or 18, with a plurality of oblique supply ducts, characterised in that the supply ducts (52) emanate from an annular duct (53) which is connected to a coolant feed line (54).

20. Machine according to Claim 16, characterised in that in the region of the inlet aperture (22) for the cutting beam there is a drivable apparatus (55) for creating the rotating coolant casing (51) which is connected to a coolant feed line (54).

21. Machine according to Claim 16, in which the cooling device in the region of the inlet aperture for the cutting beam consists of two concentrically-spaced apart substantially vertical tubes, the coolant being fed via the annular space between the two tubes and discharged through the end of the inner tube which is remote from the workpiece and being deflected at the tube ends associated with the workpiece, characterised in that in the annular gap (26) between the tubes (24, 25) there is the baffle or a rotatable device for generating the twist in the coolant casing (51).

22. Machine according to Claim 16, characterised in that the rotating coolant casing (51) is inside a pot-shaped housing (55) which can be driven to create the coolant casing, the pot rim (56) being associated in the cutting zone with the underside (20) of the workpiece, a particularly central supply bore (57) for cooling fluid being disposed in the bottom of the drivable housing (55).

23. Machine according to Claim 22, characterised in that the drivable housing (55) is enclosed by a fixed and in particular sheath or housing (58) which has a discharge orifice (59).

24. Machine according to Claim 22, characterised in that in its bottom zone the drivable housing (55) has at least one substantially radial discharge duct (63) and in that the outlet end of a supply line (65) for coolant is associated with the pot rim (56).

25. Machine according to Claim 24, characterised in that the outlet end of the feed line (65) for coolant discharges into an annular space (68) of a fixed outer housing (66) which is located above the drivable housing (55) and which in the region of the radial discharge ducts (63) forms a trap (64) with discharge bores (67) for the outflow of coolant.

**Revendications**

1. Machine d'usinage pour pièces plates, comportant un dispositif thermique de coupage par jet, en particulier un dispositif de coupage par jet de plasma, et un dispositif de déplacement de la pièce par rapport au jet de coupage, caractérisée en ce qu'elle comprend un dispositif de refroidissement (21) pour le transport guidé de l'agent de refroidissement associé à la face (20) de la pièce (3) tournée du côté opposé au jet, dispositif (21) qui présente, en face de l'ouverture de sortie du jet de coupage, une ouverture d'entrée (22) pour le jet de coupage, et en ce que le dispositif de refroidissement (21) est constitué, au voisinage de l'ouverture d'entrée (22) du jet de coupage, par deux tuyaux concentriques (24, 25) ou par des éléments concentriques (55, 58, 66) du carter, dont l'un au moins est relié à un dispositif de refoulement (29, 32) du liquide de refroidissement.

2. Machine selon la revendication 1, caractérisée en ce que le tuyau extérieur (25), avec le dispositif de refoulement du liquide de refroidissement (23) réalisé sous la forme d'une pompe de refoulement (29) et le tuyau intérieur (24) sont reliés à un dispositif d'aspiration (32) du liquide.

3. Machine selon la revendication 2, caractérisée en ce que l'extrémité libre, du côté de la pièce, du tuyau extérieur (25) surplombe, par un collet intérieur (33), celle du tuyau intérieur (24), les diamètres intérieurs du collet intérieur et du tuyau intérieur étant à peu près égaux.

4. Machine selon la revendication 3, caractérisée en ce que, en coupe longitudinale (fig. 2 et 3), le contour intérieur du tuyau extérieur (25) est, à son extrémité libre située du côté de la pièce arquée (34), en particulier à peu près semi-circulaire et que l'extrémité libre du côté de la pièce du tuyau intérieur (24) est également de section arquée.

5. Machine selon la revendication 4, caractérisée en ce que l'extrémité libre du tuyau intérieur (24), du côté de la pièce, s'élargit légèrement en forme d'entonnoir.

6. Machine selon l'une ou plusieurs des revendications 3 à 5, caractérisée en ce que l'un au moins des deux tuyaux concentriques (24, 25), en particulier le tuyau intérieur, peut être déplacé dans la direction axiale.

7. Machine selon l'une ou plusieurs des revendications précédentes, caractérisée en ce que la face frontale du tuyau extérieur (25) est perpendiculaire à l'axe (39) du tuyau et forme au moins une partie de la surface d'appui (3).

8. Machine selon l'une ou plusieurs des revendications précédentes, caractérisée par un conduit de liquide (40) pourvu d'une arrivée et d'un écoulement, qui entoure concentriquement le tuyau extérieur (25) au moins à son extrémité située du côté de la pièce, conduit (40) analogue à une rigole et qui peut être recouvert par la pièce (3).

9. Machine selon la revendication 8, caractérisée en ce que l'arrivée du conduit (40) de liquide en forme de rigole est reliée hydrauliquement à l'espace annulaire (26) compris entre le tuyau intérieur (24) et le tuyau extérieur (25) du dispositif de refroidissement (21).

10. Machine selon la revendication 8 ou 9, caractérisée en ce que la paroi intérieure de rigole du conduit (40) de liquide annulaire en forme de rigole est constituée par un troisième tuyau (47) qui entoure concentriquement le tuyau extérieur (25) du dispositif de refroidissement (21).

11. Machine selon la revendication 10, caractérisée en ce que le troisième tuyau (44) peut être déplacé dans la direction axiale (39).

12. Machine selon l'une ou plusieurs des revendications 8 à 11, caractérisée en ce que la paroi extérieure (42) de la rigole du conduit (40) de liquide annulaire en forme de rigole est constituée, au moins en partie, par la surface intérieure d'une bague d'étanchéité (43) ou en ce que le conduit (40) de liquide est entouré concentriquement d'une bague d'étanchéité dont la surface dirigée vers la pièce (3) forme une surface d'étanchéité annulaire.

13. Machine selon l'une ou plusieurs des revendications 8 à 12, caractérisée en ce que le conduit de liquide annulaire (40) est relié, au moins par une conduite hydraulique (41), à une pompe aspirante ou un réservoir de liquide.

14. Machine selon l'une ou plusieurs des revendications 8 à 13, caractérisée en ce que le conduit (40) de liquide en forme de rigole est relié hydrauliquement (46, 45, 47, 49) au dispositif de refroidissement (21), en particulier à son interstice annulaire (26).

15. Machine selon l'une ou plusieurs des revendications précédentes, caractérisée en ce que le dispsoitif thermique de coupage par jet (17) est disposé à une certaine distance latérale d'un dispositif de poinçonnage ou de grignotage de la machine d'usinage.

16. Machine selon l'une au moins des revendications précédentes, caractérisée par une enveloppe rotative (51) de liquide de refroidissement dans le dispositif de refroidissement (21), enveloppe dont l'extrémité correspondant à la pièce (3) forme l'ouverture d'entrée (22) du jet de coupage.

17. Machine selon la revendication 16, dont le dispositif de refroidissement (21) présente, au voisinage de l'ouverture d'entrée du jet de coupage, au moins un tuyau (25) (Fig. 3 et 4) ou un carter ayant un trou perpendiculaire au plan de la pièce, caractérisée en ce que la paroi du tuyau ou du carter est traversée par au moins un conduit d'arrivée (52) pour le fluide de refroidissement, conduit (52) dont l'extrémité de sortie est oblique, en particulier tangentielle à la paroi intérieure du tuyau ou au trou et dont l'extrémité extérieure est reliée à un dispositif de refoulement (29) pour le fluide de refroidissement.

18. Machine selon la revendication 17, caractérisée en ce qu'un tuyau intérieur (24) est placé dans le trou du carter ou du tuyau (25), à une certaine distance, tuyau intérieur (24) dont l'extrémité correspondant à la pièce (3) est surplombée par un collet intérieur (33) du carter ou du tuyau extérieur (25), pour former un interstice de déviation (36).

19. Machine selon la revendication 17 ou 18, présentant plusieurs conduits d'arrivée obliques, caractérisée en ce que les conduits d'arrivée (52) partent d'un conduit annulaire (53) qui est relié à une conduit d'alimentation (54) en fluide de refroidissement.

20. Machine selon la revendication 16, caractérisée en ce qu'il y a, au voisinage de l'orifice d'entrée (22) du jet de coupage, un dispositif (55) pouvant être entraîné et servant à produire l'enveloppe rotative (51) du fluide de refroidissement, ce dispositif (55) étant relié à une conduite d'alimentation (54) en fluide de refroidissement.

21. Machine selon la revendication 16, dans laquelle le dispositif de refroidissement (21), situé au voisinage de l'ouverture d'entrée du jet de coupage, est constitué par deux tuyaux à peu près concentriques à peu près verticaux disposés à une certaine distance l'un de l'autre, le liquide réfrigérant étant amené par l'espace intercalaire compris entre ces deux tuyaux, évacué par l'extrémité du tuyau intérieur située du côté opposé à la pièce et dévié aux extrémités des tuyaux correspondant à la pièce, caractérisée en ce que, dans l'espace intercalaire annulaire (26) compris entre les tuyaux (24, 25), se trouvent des tôles de guidage produisant la rotation de l'enveloppe (51) du fluide de refroidissement ou un dispositif de rotation que l'on peut faire tourner, pour l'enveloppe du fluide de refroidissement qui monte.

22. Machine selon la revendication 16, caractérisée en ce que l'enveloppe (51) du fluide de refroidissement rotative se trouve à l'intérieur d'un carter (55) en forme de pot pouvant être entraîné pour produire l'enveloppe (51) du fluide de refroidissement, dont le bord (56) correspond à la face inférieure (20) de la pièce dans la zone de coupage, un trou d'arrivée (57) du fluide de refroidissement se trouvant dans le fond du pot du carter (55) pouvant être entraîné, en particulier situé au centre.

23. Machine selon la revendication 22, caractérisée en ce que le carter (55) pouvant être entraîné est entouré d'une gaine fixe, en particulier tubulaire, ou d'un carter (58) qui présente un trou d'écoulement (59).

24. Machine selon la revendication 22, caractérisée en ce que le carter (55) pouvant être entraîné présente, à sa partie inférieure, au moins un canal d'écoulement (63) à peu près radial et en ce que l'extrémité de sortie d'une conduite d'arrivée (65) du fluide de refroidissement correspond au bord (56) du pot.

25. Machine selon la revendication 24, caractérisée en ce que l'extrémité de sortie de la conduite d'arrivée (65) du fluide de refroidissement débouche dans un espace annulaire (68), situé au-dessus du carter (55) pouvant être entraîné, d'un carter fixe extérieur (66) qui forme, au voisinage du ou des canaux radiaux (63), un espace (64) collecteur présentant des trous d'écoulement (67), pour le fluide de refroidissement.

FIG.1

0 046 929

# FIG. 2

FIG.3

FIG.4

FIG. 5

FIG. 6